## Europäisches Patentamt

## European Patent Office

## Office européen des brevets

(11) Veröffentlichungsnummer: **0 063 248**

**A1**

(12) **EUROPÄISCHE PATENTANMELDUNG**

(21) Anmeldenummer: 82102339.7

(22) Anmeldetag: 22.03.82

(51) Int. Cl.³: **C 03 B 37/06**
C 03 B 37/09, D 01 D 5/14

(30) Priorität: 02.04.81 DE 3113388

(43) Veröffentlichungstag der Anmeldung:
27.10.82 Patentblatt 82/43

(84) Benannte Vertragsstaaten:
AT BE CH DE FR GB IT LI LU NL SE

(71) Anmelder: Rheinhold & Mahla GmbH
Carl-Reiss-Platz 7 - 9
D-6800 Mannheim(DE)

(72) Erfinder: Muschelknautz, Edgar, Prof. Dr.
Carl-Rumpff-Strasse 13
D-5090 Leverkusen(DE)

(72) Erfinder: Rink, Norbert, Dr.
Frixheimerstrasse 60
D-4049 Rommerskirchen(DE)

(74) Vertreter: Drope, Rüdiger, Dr. et al,
c/o Bayer AG Zentralbereich Patente Marken und
Lizenzen
D-5090 Leverkusen 1, Bayerwerk(DE)

(54) Verfahren und Vorrichtung zur Verteilung von Schmelzen, insbesondere Mineralschmelzen.

(57) Es wird ein Verfahren zur Verteilung von Schmelze, insbesondere Mineralschmelzen (1), in eine Vielzahl von zu Fasern ausziehbare Schmelzefäden beschrieben, das dadurch gekennzeichnet ist, daß die Schmelze (1)

a) aus einem diese enthaltenden Reservoir (2) auf einen in Strömungsrichtung ausgedehnten Heizkörper (5) aufgebracht wird,

b) an diesem unter Bildung eines gleichmäßigen Schmelzefilms (6) herabströmt,

c) an einer Vielzahl von an der Unterseite des Heizkörpers (5) erzeugten Diskontinuitäten (7) gesammelt wird, und

d) von den Diskontinuitäten als zu Fasern ausziehbare Schmelzefäden (8) abfließt.

FIG. 1 (A-A)

0063248

Rheinhold & Mahla GmbH          6800 Mannheim 1

                                Dp/bc/bo/c

Verfahren und Vorrichtung zur Verteilung von Schmelzen,
insbesondere Mineralschmelzen

Bei der Faserherstellung aus Schmelzen, insbesondere
Mineralschmelzen, tritt die Schmelze im allgemeinen
aus einem Schmelzofen, der gegebenenfalls Vorherde
aufweist, aus und wird in einer im allgemeinen als
Tiegel ausgebildeten Verteilervorrichtung in einzelne
feine Schmelzefäden aufgeteilt. Die einzelnen Schmelzefäden werden danach der eigentlichen Faserziehvorrichtung zugeführt. Für das Ausziehen zu Fasern sind die
verschiedensten Verfahren vorgeschlagen worden. Zum
Beispiel können die Schmelzefäden durch Zug ausgezogen
und gleichzeitig erstarrt werden und dann auf eine
Trommel aufgewickelt werden. Dieses Verfahren wird
im allgemeinen zur Herstellung von Endlosfasern eingesetzt. Zur Herstellung von Wirrvliesen ist das
Düsenblasverfahren oder das Zerblaseverfahren neben
anderen bekannt.

Der Verteilertiegel weist im allgemeinen an seiner
Unterseite durchbohrte Nippel auf, durch die die
Schmelze in einzelnen Fäden austritt. Zur Beheizung
des Verteilertiegels hat sich allgemein eine elek-

RM 465

trische Beheizung durchgesetzt, wobei die metallischen Wände des Tiegels als Heizleiter fungieren. Die Anforderungen an Konstruktion und Material des Verteilertiegels sind hoch. Der Verteilertiegel muß nämlich zur Herstellung möglichst gleichmäßiger Fasern eine Vielzahl von Schmelzeströmen gleicher Temperatur und von gleichem Massestrom über längere Zeiträume bereitstellen. Ferner soll der Tiegel eine weitere Homogenisierung und Läuterung der Schmelze ermöglichen. Insbesondere bei der Herstellung von Mineralfasern befindet sich der Verteilertiegel auf Schmelzetemperaturen von 1200 bis 1800°C und ist damit einem schnellen korrosiven Abtrag ausgesetzt, der die Lebensdauer der Tiegel stark begrenzt. Der Wärmeübergang von dem elektrisch beheizten Tiegel zu dem Schmelzevolumen ist aufgrund der schlechten Wärmeleitfähigkeit der Schmelze begrenzt. Es bilden sich daher leicht "Wärme- bzw. Kältenester" im Tiegel. Insbesondere bei der Herstellung von Mineralwolle treten leicht Kristallisationen in der Schmelze auf, die zu einer Verstopfung der Nippelbohrungen führen können.

Aufgabe der vorliegenden Erfindung ist es, diese und andere Nachteile der bekannten Verfahren zur Verteilung von Schmelzen zu vermeiden.

Es wurde gefunden, daß eine verbesserte Temperaturverteilung und Läuterung der Schmelze erreicht wird, wenn diese vor ihrer Aufteilung in Einzelschmelzefäden in Form eines dünnen Films in Kontakt mit einem Heizkörper gebracht wird.

RM 465

Gegenstand der vorliegenden Erfindung ist ein Verfahren zur Verteilung von Schmelzen, insbesondere Mineralschmelzen, in eine Vielzahl von zu Fasern ausziehbaren Schmelzefäden, das dadurch gekennzeichnet ist, daß die Schmelze

a)    aus eine diese enthaltendem Reservoir auf einen in Strömungsrichtung ausgedehnten Heizkörper aufgebracht wird,

b)    an diesem unter Bildung eines gleichmäßigen Schmelzefilms herabströmt,

c)    an einer Vielzahl von an der Unterseite des Heizkörpers erzeugten Diskontiunuitäten gesammelt wird, und

d)    von den Diskontinuitäten in Form von zu Fasern ausziehbaren Schmelzefäden abfließt.

Erfindungsgemäß erfolgt demnach die Verteilung der Schmelze nicht durch einen Tiegel mit Schmelzvorrat und Austrittsöffnungen, sondern über einen kontinuierlich fließenden Schmelzefilm, der in engen Kontakt mit dem Heizkörper dessen Temperatur annimmt und gleichzeitig über die relativ große Oberfläche in der Lage ist, eingeschlossene Gase abzugeben.

Vorzugsweise wird eine linear angeordnete Reihe oder Doppelreihe von Schmelzefäden erzeugt. Der Heizkörper ist demnach linear ausgedehnt und besitzt an seiner

RM 465

Unterkante eine lineare Reihe oder Doppelreihe von Diskontinuitäten. Der Heizkörper ist vorzugsweise ein metallischer Heizkörper, der quer zur Strömungsrichtung der Schmelze in Richtung seiner horizontalen Ausdehnung parallel zu der Reihe von Diskontinuitäten von Strom durchflossen wird.

Der auf dem Heizkörper herabströmende Schmelzefilm wird vorzugsweise durch Reflektoren oder Strahlungskörper gegen zu starke Abkühlung an seiner freien Oberfläche geschützt.

Die Diskontinuitäten an der Unterseite des Heizkörpers können Zapfen- oder Zackenreihen sein, an denen der Schmelzefilm gesammelt wird, so daß die Schmelze in Einzelfäden hiervon abfließt.

Die Schmelzefäden treten dann in eine Faserziehvorrichtung ein. Vorzugsweise wird im Zusammenhang mit dem erfindungsgemäßen Verfahren ein Düsenziehverfahren eingesetzt. Dabei treten die Schmelzefäden entweder in eine gemeinsame schlitzförmige Ziehdüse oder in eine Vielzahl von Einzelziehdüsen ein und werden durch die Wirkung von im wesentlichen parallel zu den Schmelzefäden strömenden Gasen zu Fasern ausgezogen. Der Antrieb der Ausziehgase erfolgt durch ein über der Ziehdüse erzeugtes Druckgefälle. Im allgemeinen werden unterhalb der Ziehdüse Treibstrahlen zur Erzeugung des Druckgefälles eingesetzt. Die verschiedenen Möglichkeiten der Ausbildung des Düsenziehverfahrens sind dem Fachmann

RM 465

wohlbekannt.

Das erfindungsgemäße Verfahren kann aber auch in Zusammenhang mit anderen bekannten Auszieh- und Zerfaserungsverfahren eingesetzt werden.

Besonders bevorzugt werden die Diskontinuitäten als Bohrungen an der Unterseite des als Druckgas führender Hohlkörper ausgebildeten Heizkörpers ausgeführt. Die an der Unterseite des Heizkörpers durch die Bohrungen austretenden Gasströme bewirken eine Sammlung des Schmelzefilms und ein Abfließen von Hohlschmelzefäden. Solche Hohlschmelzefäden lassen sich insbesondere durch das Düsenblasverfahren besonders vorteilhaft zerfasern.

Besonders vorteilhaft kann es auch sein, die Diskontinuitäten als durchbohrte Zapfen eines als Druckgas führender Hohlkörper ausgebildeten Heizkörpers zu gestalten. In diesem Fall haben die Diskontinuitäten etwa die Form der bekannten Nippel, wobei jedoch die Schmelze an der Außenseite der Nippel entlangströmt und durch die Bohrung in den abfließenden Schmelzefaden Gas eingelassen wird.

Der Gasdruck innerhalb des Heizkörpers braucht nur wenig oberhalb Normaldruck zu liegen. Ein Druck von 50 bis 200 mbar, vorzugsweise etwa 80 bis 120 mbar, ist ausreichend.

Der gegenseitige Abstand der Diskontinuitäten liegt vorzugsweise zwischen 3 und 10 mm, besonders bevor-

RM 465

zugt etwa 6 bis 8 mm.

Die geometrische Gestaltung der Diskontinuitäten, d.h. die Form der Zapfen und/oder Durchmesser der Bohrungen, wird zweckmäßig durch Vorversuche festgelegt. Je nach Art der Schmelze sind die verschiedenen alternativen geometrischen Formen unterschiedlich geeignet. Die jeweils zu berücksichtigenden Einflußgrößen sind das Temperatur-Viskositäts-Verhalten der Schmelze, die Schmelztemperatur und das Wärmeabstrahlungsverhalten der Schmelze bzw. der Umgebung der Schmelze, sowie der im Hinblick auf den gewünschten Faserdurchmesser einzustellende Massenstrom je Schmelzefaden.

Die Heizstromzuführung zu dem erfindungsgemäßen Verteiler erfolgt über an beiden Enden des in Längsrichtung ausgedehnten Heizleiters vorgesehene "Ohren", an denen vorzugsweise gekühlte Kupferstromzuleitungen angeschraubt werden. Die Kupferstromzuleitungen dienen gleichzeitig als Halterung für den Verteiler.

Die Schmelzezufuhr zu dem Verteiler erfolgt entweder durch im Boden des Mineralschmelzeofens vorgesehenen Öffnungen, oder über Vorherde. Bei langgestreckten Verteilern mit vorzugsweise etwa 100 in Reihe angeordneten Diskontinuitäten werden zur Gewährleistung einer gleichmäßigen Ausbreitung der Schmelze auf dem Heizkörper mehrere Schmelzezuflüsse vorgesehen. Ein hinreichend gleichmäßiger Schmelzefilm auf dem Heizkörper wird erreicht, wenn der Strömungsweg des Schmelzefilms auf dem Heizkörper 1 bis 3 mal, vor-

RM 465

zugsweise etwa 2 mal so lang ist wie der Abstand zweier Schmelzeströme in Längsrichtung des Heizkörpers.

Zur Erzielung von mehreren gleichmäßigen Schmelzezuflüssen kann es zweckmäßig sein, zwischen dem Schmelzeauslaß des Mineralschmelzofens bzw. des Vorherdes und dem Verteiler einen über die Länge des Verteilers sich erstreckenden Zwischentiegel mit einer entsprechenden Anzahl von Bohrungen zur Erzeugung mehrerer Schmelzezuflüsse vorzusehen.

Der Verteiler-Heizkörper kann sehr verschiedene Querschnittsformen aufweisen. Einige beispielhafte und bevorzugte Formen sind in den nachfolgenden Figuren dargestellt. Wesentlich ist, daß die Oberseite des Verteiler-Heizkörpers relativ flach gestaltet ist, so daß bereits beim Auftreffen der Schmelze eine Verteilung erfolgt. Vorzugsweise wird die Oberseite des Verteiler-Heizkörper-Querschnitts in Form eines Kreisbogens gestaltet, da dieser eine größtmögliche Formstabilität beim Aufheizen auf Mineralschmelze-Temperaturen gewährleistet. Ein solcher Verteilerheizkörper kann durch seitliches Verschieben und/oder Verkippen um eine vertikale Achse so justiert werden, daß der Schmelzezufluß auf beiden Seiten des Verteilerheizkörpers gleichmäßig abfließt.

Der Verteiler-Heizkörper kann aus Platin bzw. Platin/ Rhodium-Legierungen gefertigt sein. Wenn dafür Sorge getragen wird, daß der Verteiler-Heizkörper vollständig

RM 465

zumindest im Bereich hoher Temperatur von Mineralschmelze umspült wird, ist es auch möglich, diesen aus gegen die Mineralschmelze beständigen Nicht-Edelmetallen, z.B. Molybdän oder geeigneten Molybdänlegierungen zu fertigen. Es muß lediglich dafür Sorge getragen werden, daß der Übergangstemperaturbereich zwischen dem mit der Mineralschmelze in Kontakt stehenden Bereich des Verteiler-Heizkörpers und den gekühlten elektrischen Anschlüssen gegen Oxidation geschützt ist. Der Oxidationsschutz kann durch Einkapselung in eine Edelmetall- oder Keramikhülse erfolgen. Der Oxdationsschutz kann aber auch durch eine nicht oxidierende Atmosphäre gewährleistet werden. Zum Beispiel kann der Verteiler-Heizkörper in dem Übergangstemperaturbereich durch inerte Gase angeströmt werden. Ferner können die Teile des Verteiler-Heizkörpers, die sich auf Temperaturen zwischen z.B. 100 bis 800°C befinden, durch eine Emailschicht gegen Oxdation geschützt werden. Der Fachmann ist ohne weiteres in der Lage, je nach der konstruktiven Gestaltung des Verteiler-Heizkörpers geeignete Maßnahmen bzw. Maßnahmenkombinationen zum Schutz des Verteilerheizkörpers gegen Oxidation zu ergreifen.

Erfindungsgemäß wird besonders bevorzugt ein Verteiler-Heizkörper aus Molybdän bzw. geeigneten Molybdänlegierungen zur Herstellung von Steinwolle nach dem Düsenblasverfahren eingesetzt, wenn die Steinwolle in Kupolöfen geschmolzen wird, insbesondere da die Kupolofen-Schmelze im allgemeinen metallisches Eisen enthält, das mit Edelmetall legiert.

RM 465

Die Erfindung wird anhand der beigefügten Figuren nachfolgend näher erläutert:

Fig. 1,2 und 3 zeigen verschiedene Ansichten einer Ausführungsform des erfindungsgemäßen Verteilers;

Fig. 4,5 und 6 zeigen verschiedene Querschnittsformen des erfindungsgemäßen Verteilers;

Fig. 7 und 8 zeigen einen erfindungsgemäßen Verteiler zur Erzeugung einer Doppelreihe von Schmelzefäden;

Fig. 9,10 und 11 zeigen unterschiedliche Ausführungsformen für erfindungsgemäße Verteiler, bei denen die die Schmelzefäden erzeugenden Diskontinuitäten Druckgas führende Bohrungen sind;

Fig. 12,13 und 14 zeigen verschiedene Ansichten einer weiteren Ausführungsform des erfindungsgemäßen Verteilers.

Die in den Figuren angegebenen Ziffern bezeichnen im einzelnen, wobei gleiche Ziffern in verschiedenen Figuren jeweils vergleichbare Elemente bezeichnen:

| 1 | Schmelzereservoir |
| 2 | Bodenplatte des Schmelzereservoirs |
| 3 | Schmelzeauslaßöffnung |
| 4 | Schmelzezulauf zum Verteiler |
| 5 | Verteiler |
| 6 | Schmelzefilm auf dem Verteiler |
| 7 | Diskontinuität, von der Schmelzefäden ablaufen |

RM 465

8     Schmelzefaden

9     Faserziehvorrichtung, beispielhaft jeweils Ziehdüse des Düsenblasverfahrens

10    Stromanschluß-"Ohr" des Verteilers

11    wassergekühlte Kupferstromzuführungen (Wasserkühlung nicht gezeichnet)

12    Verschraubung der Stromzuführung

13    Bohrungen zur Verteilung des Schmelzefilms auf
      beiden Seiten des Verteilers

14    Abdeckung der Verteileroberfläche im Übergangstemperaturbereich.

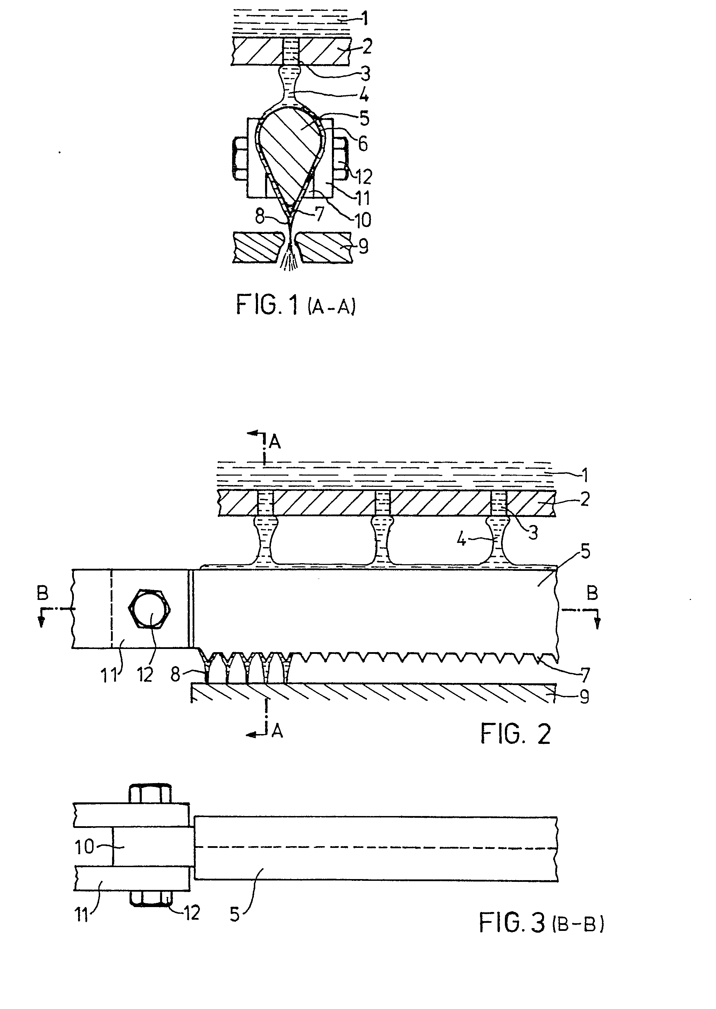

Fig. 1 zeigt einen Schnitt durch den erfindungsgemäßen
Verteiler entlang der Linie A/A in Fig. 2. Fig. 2 zeigt
den Abschnitt einer Seitenansicht des erfindungsgemäßen
Verteilers und Fig. 3 eine Aufsicht auf den erfindungsgemäßen Verteiler. Die Bodenplatte 2, z.B. eines Vorherdes eines Mineralschmelzofens, weist Bohrungen 3 auf,
aus denen die Schmelze 1 in Form von freien Schmelzeströmen 4 auf den Verteilerkörper auffließt. Wie aus
dem Vergleich der Fig. 1 und 2 erkennbar ist, beträgt
der Strömungsweg des Schmelzefilmes 6 entlang der
Querschnittsmantellinie des Verteilers 5 das 1,3- bis
1,4-fache des Abstandes zweier Zufluß-Schmelzeströme 4.

Der Verteiler 5 wird durch direkte elektrische Beheizung auf solche Temperatur beheizt, daß der herabfließende Schmelzefilm 6 die für die Zerfaserung geeignete Temperatur annimmt. Hierzu sind an beiden
Enden des Verteilers im allgemeinen als "Ohren" bezeichnete Stromanschlußstücke 10 vorgesehen. Die Stromzufuhr erfolgt über Kupferleitungen 11, die z.B. mit dem Stromanschlußstück 10 verschraubt sind. Der langgestreckte
Verteiler wird also in Längsrichtung vom elektrischen
Strom durchflossen, so daß in jedem Querschnittsabschnitt in Längsrichtung die gleiche Wärme erzeugt
wird.

Zur Vermeidung einer zu starken Abkühlung des Schmelzefilms 6 an seiner Außenseite werden zweckmäßig beidseitig des Verteilerheizkörpers Strahlungsreflektoren in
Form gekrümmter Bleche angeordnet. Anstelle von Reflektoren können auch z.B. keramische Strahlungskörper
vorgesehen sein. Aus energetischen Gründen sind Reflektoren bevorzugt, da diese keine gesonderte Beheizung
benötigen.

An der Unterkante des hier in Form eines umgekehrten
Tropfens als Querschnittsfläche (Fig. 1) ausgebildeten
Verteilerheizkörpers 5 sind Zapfen 7 vorgesehen, an
denen sich der herabfließende Schmelzefilm 6 sammelt
und in Form von Schmelzefäden 8 abfließt. Der Einfachheit halber sind in Fig. 2 nur einige der Schmelzefäden
dargestellt. Die Reihe von Schmelzefäden 8 tritt dann
z.B., wie hier gezeichnet, in eine schlitzförmige Ziehdüse 9 ein und wird zerfasert. Die Ziehdüse 9 ist in
der Fig. 1 lediglich angedeutet. Sie ist nicht Gegenstand der vorliegenden Erfindung und kann durch andere bekannte Zerfaserungsverfahren ersetzt werden.

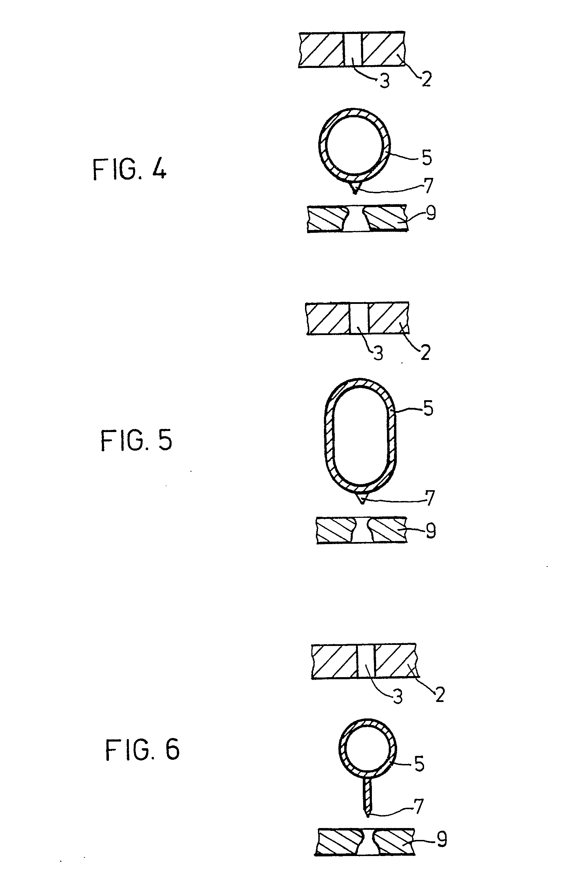

In Fig. 4, 5 und 6 sind alternative Querschnittsformen
des erfindungsgemäßen Verteilers dargestellt. Wie in

RM 465

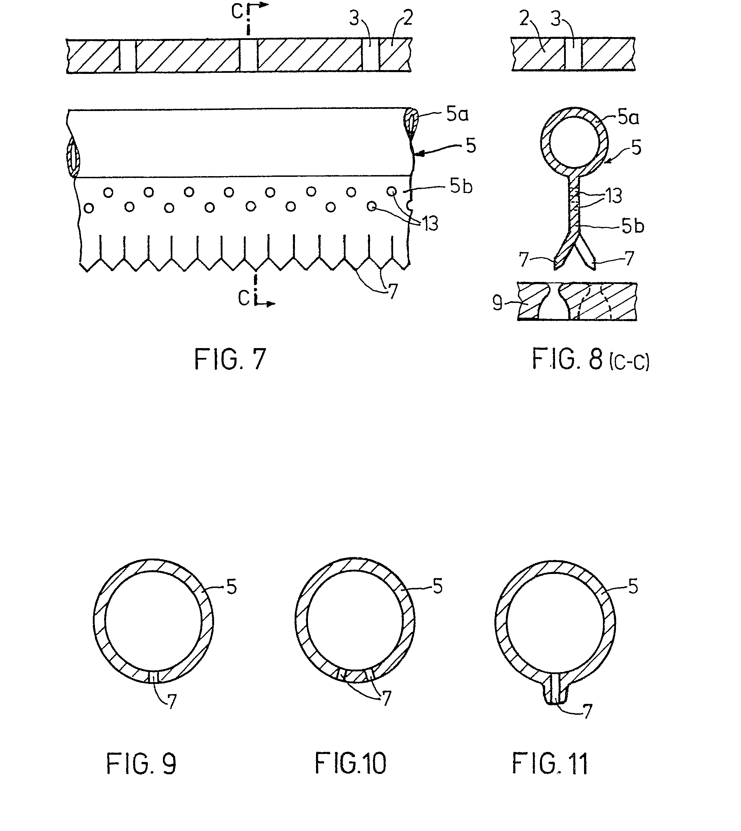

den Figuren gezeigt, wird der Verteiler-Heizkörper schon aus Stabilitätsgründen vorzugsweise als rohrförmiger Hohlkörper ausgebildet. Fig. 7 und 8 zeigen verschiedene Ansichten einer anderen Ausführungsform des erfindungsgemäßen Verteilers 5. Unterhalb eines Verteileroberteils 5a mit etwa kreisförmigem Querschnitt ist ein Verteilerheizkörperblech 5b mit Bohrungen 13 angeordnet. Die Bohrungen 13 dienen der Verbesserung der Verteilung des Schmelzefilms. Sie erlauben insbesondere einen Austausch der auf beiden Seiten herabströmenden Schmelze. Die Zapfen 7 am unteren Ende des Verteilers sind alternativ nach beiden Seiten (Fig. 8) abgebogen, so daß eine Doppelreihe von Schmelzefäden erzeugt wird. Es kann zweckmäßig sein, den oberen Teil 5a von dem unteren Teil 5b getrennt auszuführen, so daß ein Schlitz zwischen Oberteil 5a und Unterteil 5b offenbleibt. Der freie Abstand von Oberteil 5a und Unterteil 5b, d.h. die Höhe des erzeugten Schlitzes, sollte nicht größer sein, als der Tropfendurchmesser der Schmelze, so daß der Schlitz vollständig überflutet ist. Auch auf diese Weise wird eine Vergleichmäßigung des Schmelzeflusses auf beiden Seiten des Verteilers bewirkt. Ober- und Unterteil müssen aber beide beheizt sein. Die Anordnung mit getrenntem Oberteil 5a und Unterteil 5b erlaubt, beide Teile auf unterschiedlich hohen Temperaturen zu halten und so die Schmelzetemperatur optimal zu regeln. Zum Beispiel kann die Schmelze auf dem Oberteil auf höherer Temperatur gehalten werden, so daß sie eine geringere Viskosität aufweist und beim Abströmen über den unteren Teil auf die optimale Zer-

RM 465

faserungstemperatur abgekühlt wird.

Fig. 9, 10 und 11 zeigen alternative Ausführungsformen für die Diskontinuitäten am unteren Ende des Verteilers. Die Diskontinuitäten sind hier als Bohrungen 7 ausgeführt, durch die Druckgas zur Erzeugung der Schmelzefäden ausströmt. Eine besonders gute Trennung der Schmelzefäden wird dann erreicht, wenn gemäß Fig. 11 die Diskontinuität 7 aus einem durchbohrten Zapfen besteht.

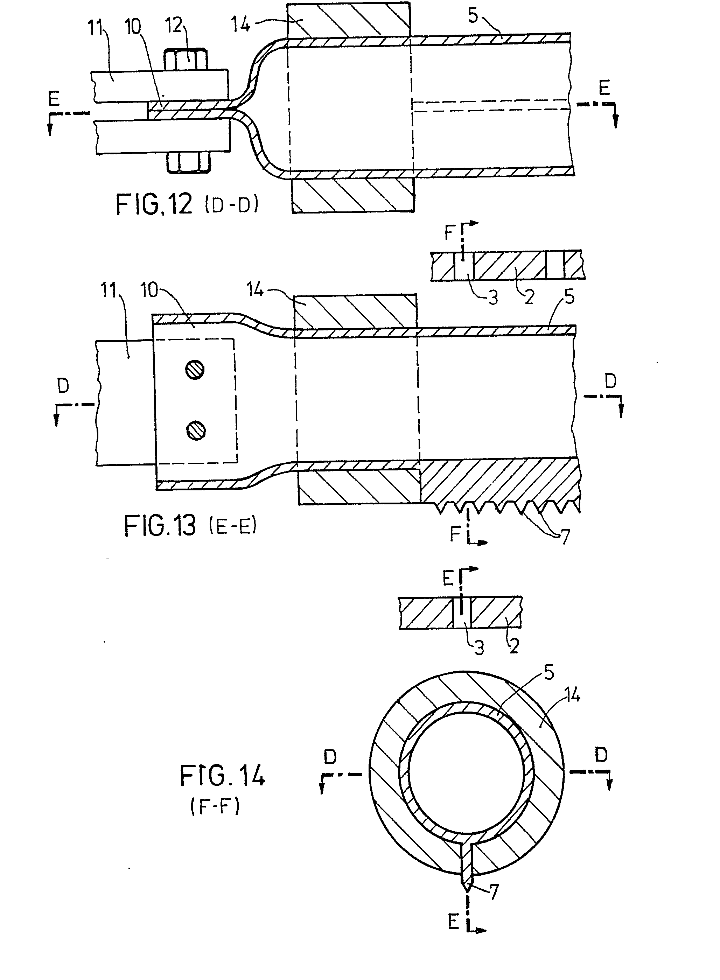

Fig. 12 bis 14 zeigen eine erfindungsgemäße Ausführungsform, bei der der Verteiler aus einem Nicht-Edelmetall gefertigt ist. Der Verteiler 5 besteht aus einem Rohr, das an beiden Enden zur Erzeugung der Stromanschluß-"Ohren" 10 zusammengequetscht ist. Die Ohren sind über die wassergekühlten Kupferanschlüsse 11 gekühlt. Im Bereich oberhalb der Zapfen 7 befindet sich der Verteiler auf Schmelzetemperatur und wird voll von der Schmelze umströmt. Der Übergangstemperaturbereich ist durch eine keramische Hülse 14 abgedeckt und gegen Oxidation geschützt. Wie aus dem Vergleich der Fig. 13 und 14 ablesbar ist, beträgt hier der Strömungsweg des Schmelzefilms über die Außenfläche des Verteilers etwa das 2-fache des Abstandes zweier Schmelzezuflußöffnungen 3 im Boden 2 des Schmelzereservoirs.

RM 465

Patentansprüche

1) Verfahren zur Verteilung von Schmelzen, insbesondere Mineralschmelzen, in eine Vielzahl von zu Fasern ausziehbare Schmelzefäden, dadurch gekennzeichnet, daß die Schmelze

a) aus einem diese enthaltenden Reservoir auf einen in Strömungsrichtung ausgedehnten Heizkörper aufgebracht wird,

b) an diesem unter Bildung eines gleichmäßigen Schmelzefilms herabströmt,

c) an einer Vielzahl von an der Unterseite des Heizkörpers erzeugten Diskontinuitäten gesammelt wird, und

d) von den Diskontinuitäten als zu Fasern ausziehbare Schmelzefäden abfließt.

2) Verfahren nach Anspruch 1, dadurch gekennzeichnet, daß in dem Heizkörper quer zur Strömungsrichtung der Schmelze ein elektrischer Strom zur Erzeugung von Joule'scher Wärme fließt.

3) Verfahren nach Anspruch 1 oder 2, dadurch gekennzeichnet, daß der Schmelzefilm durch beidseitig des Heizkörpers angeordnete Reflektoren gegen oberflächliche Abkühlung geschützt wird.

RM 465

4) Verfahren nach einem der Ansprüche 1 bis 3, dadurch gekennzeichnet, daß die Diskontinuitäten durch eine Vielzahl von Bohrungen erzeugt werden, die an der Unterseite des als Hohlkörper ausgebildeten Heizkörpers vorgesehen sind.

5) Verfahren nach einem der Ansprüche 1 bis 4, dadurch gekennzeichnet, daß der Heizkörper in horizontaler Richtung linear ausgedehnt ist und eine oder mehrere parallele Reihen von Schmelzefäden erzeugt werden.

6) Verfahren nach einem der Ansprüche 1 bis 5, dadurch gekennzeichnet, daß die Schmelze auf den Heizkörper in einem oder mehreren Schmelzeströmen aufgebracht wird und der Strömungsweg des Schmelzefilms auf dem Heizkörper 1- bis 3-mal, vorzugsweise 2 mal so lang ist, wie der Abstand zweier Schmelzeströme.

7) Verteiler für Schmelzen, insbesondere Mineralschmelzen, gekennzeichnet durch einen an seiner Oberseite stumpfen, in vertikaler Richtung ausgedehnten Heizkörper, der an seiner Unterseite eine Vielzahl in Reihe oder Doppelreihe angeordnete Diskontinuitäten aufweist.

8) Verteiler nach Anspruch 7, dadurch gekennzeichnet, daß der Verteiler in horizontaler Richtung länglich ausgedehnt ist, an beiden Enden der horizontalen Ausdehnung Stromanschlußstücke aufweist, die mit Wasser gekühlten Stromzuführungen verbunden sind, und die Teile des Verteilers zwischen den

RM 465

Stromanschlüssen und der an der Unterseite des Verteiler angebrachten Einzel- bzw. Doppelreihen und Diskontinuitäten gegen Oxidation geschützt sind.

9) Verteiler nach Anspruch 7 oder 8, dadurch gekennzeichnet, daß die Diskontinuitäten durch Durchgangsbohrungen in der Unterseite des als Hohlkörper ausgebildeten Heizkörpers erzeugt werden.

10) Anwendung des Verfahrens bzw. des Verteilers nach einem der Ansprüche 1 bis 9 zur Herstellung von Steinwolle nach dem Düsenblasverfahren.

RM 465

FIG. 1 (A-A)

FIG. 2

FIG. 3 (B-B)

FIG. 4

FIG. 5

FIG. 6

FIG. 7

FIG. 8 (C-C)

FIG. 9

FIG.10

FIG. 11

FIG.12 (D-D)

FIG.13 (E-E)

FIG.14
(F-F)

# 0063248

EUROPÄISCHER RECHERCHENBERICHT

Europäisches Patentamt

Nummer der Anmeldung

EP 82 10 2339

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 227 357 (MARTIN) <br><br> * Figuren 3,4,7; Seite 2 * & GB - A - 519 053 | 1,3-5, 7,10 | C 03 B 37/06 <br> C 03 B 37/09 <br> D 01 D 5/14 |
| | --- | | |
| X | GB-A- 481 827 (PIERO MODIGLIANI) <br> * Insgesamt * | 1,3-5, 7,10 | |
| | ----- | | |

RECHERCHIERTE SACHGEBIETE (Int. Cl. ³)

C 03 B 7/00
C 03 B 37/00
D 01 D 5/00

Der vorliegende Recherchenbericht wurde für alle Patentansprüche erstellt.

| Recherchenort DEN HAAG | Abschlußdatum der Recherche 13-07-1982 | Prüfer VAN DEN BÖSSCHE W.L. |
|---|---|---|